# EUROPEAN PATENT APPLICATION

(11) **EP 4 534 593 A1**
(43) Date of publication of application: **09.04.2025**
(21) Application number: 23812201.4
(22) Date of filing: 26.05.2023
(51) Int. Cl.: C08L 23/00, C08L 23/26, C08L 67/00, C08L 101/16, C08J 5/18, C08L 67/02, C08L 23/06, C08L 3/02, C08L 51/06

(54) **BIODEGRADABLE RESIN COMPOSITION, BIODEGRADABLE RESIN MOLDED PRODUCT, AND MANUFACTURING METHOD THEREFOR**

(30) Priority: 27.05.2022 KR 20220065227; 27.05.2022 KR 20220065237
(71) Applicant: Hanwha Solutions Corporation, Jung-gu Seoul 04541 (KR)
(72) Inventor: LIM, Yu Jeong, Seoul 04541 (KR); LIM, Jae Yun, Seoul 04541 (KR); PARK, Jeong Hyun, Seoul 04541 (KR); PARK, Hyun Kyu, Seoul 04541 (KR)
(74) Representative: Berggren Oy
(86) International application number: PCT/KR2023/007281
(87) International publication number: WO 2023/229427

(57) **Abstract**

Provided are a biodegradable resin composition and a biodegradable resin molded article, and the biodegradable resin composition includes (A) a polyolefin-based compound, (B) a biodegradable resin, (C) an aliphatic-aromatic copolyester-based compound, and (D) a modified polyolefin-based compound, wherein (A) the polyolefin-based compound is included in an amount of 7 to 30 wt% with respect to a total of (A) to (D), and a total of (C) the aliphatic-aromatic copolyester-based compound and (D) the modified polyolefin-based compound is included in an amount of 45 to 80 wt% with respect to the total of (A) to (D).

## Description

### CROSS-REFERENCE TO RELATED APPLICATION

The present application claims priority and the benefit of Korean Patent Application No. 10-2022-0065227, filed on May 27, 2022 and Korean Patent Application No. 10-2022-0065237, filed on May 27, 2022, in the Korean Intellectual Property Office, the entire disclosure of which is incorporated herein by reference.

### BACKGROUND

### 1. Field of the Invention

According to an embodiment, the present invention relates to a biodegradable resin composition, a biodegradable resin molded article, and a method of manufacturing the same. Specifically, according to an embodiment, the present invention relates to a biodegradable resin composition, a biodegradable resin molded article, and a method of manufacturing the same, which provide excellent biodegradability by imparting biodegradability to a non-degradable polyolefin and exhibit significantly improved drop impact strength and improved mechanical properties.

### 2. Discussion of Related Art

Plastics have excellent properties and are cheap and lightweight. Therefore, plastics have built a modern scientific civilization as various polymer materials have been developed around plastics beyond the limitation of natural materials. Plastics are strong, lightweight, and tough and do not easily decompose. Due to such features, plastics have been widely used in a variety of ways from industrial materials to disposable materials.

However, plastic waste is becoming more and more serious day by day, and environmental pollution caused thereby is becoming problematic. For example, social demand for environmentally friendly plastics is increasing due to detection of poisonous dioxin, detection of endocrine disruptors, shortage of waste plastic landfills, and the like. Also, the standards of legal regulations prescribed for the use of non-degradable plastics by each country are increasingly strengthened. Accordingly, the development of biodegradable polymers has emerged as a very important issue.

According to the standard of American Society for Testing and Materials (ASTM), degradable plastics refer to plastics whose chemical structure significantly changes under specific environmental conditions for a certain period of time, and thus the change in properties can be measured by standard test methods, and they may be largely divided into photodegradable, biodestructive, and biodegradable plastics.

Specifically, photodegradable plastics refer to plastics that are decomposed by light in the form of photo-oxidation or ketone photodegradation. Since photodegradable plastics are decomposed by light, there is a disadvantage in that they do not decompose when buried in the ground where light is blocked.

Biodestructive plastics refer to partially degradable plastics manufactured by adding a certain amount of biodegradable materials such as starch to typical non-degradable resins (polyethylene, polypropylene, etc.). In Korea, the term biodestructive plastic is used to avoid confusion with biodegradable plastics and distinguish it from biodegradable plastics.

Biodegradable plastics refer to plastics that are completely decomposed into water and carbon dioxide or water and methane gas by microorganisms present in the natural world, such as bacteria, algae, and fungi.

In the past, photodegradable plastics or biodestructive plastics were mainly used, but recently, the development of biodegradable plastics has attracted attention as an important issue. Biodegradable plastics can be distinguished from conventional petroleum-based plastics by using natural plant resources in terms of raw materials.

For example, Korean Unexamined Patent Publication No. 10-2018-0023037 discloses a thermoplastic film composition including a polymer blend consisting of immiscible polymers. The composition includes a plasticized natural polymer, a polyolefin, a biodegradable polymer, and a compatibilizer. The plasticized natural component and biodegradable polymer component form a major phase, and the petroleum-based polyolefin forms a minor phase. Also, the composition can be used to manufacture a film including a renewable natural polymer component.

However, there is a need to develop a biodegradable resin composition that simultaneously satisfies improved biodegradability and mechanical properties, especially, drop impact strength.

### (Related Art Documents)

### [Patent Documents]

Patent Document 1: Korean Unexamined Patent Publication No. 10-2018-0023037

### SUMMARY OF THE INVENTION

According to an embodiment, a biodegradable resin composition and a biodegradable resin molded article, which provide excellent biodegradability despite including a non-degradable polyolefin-based compound and exhibit significantly improved drop impact strength, are provided.

According to another embodiment, a biodegradable resin composition and a biodegradable resin molded article, which exhibit excellent mechanical properties, are provided.

According to an embodiment, a biodegradable resin composition is provided.
1. The biodegradable resin composition includes: (A) a polyolefin-based compound; (B) a biodegradable resin; (C) an aliphatic-aromatic copolyester-based compound; and (D) a modified polyolefin-based compound, wherein (A) the polyolefin-based compound is included in an amount of 7 to 30 wt% with respect to a total of (A) to (D), and a total of (C) the aliphatic-aromatic copolyester-based compound and (D) the modified polyolefin-based compound is included in an amount of 45 to 80 wt% with respect to the total of (A) to (D).
2. According to 1, (A) the polyolefin-based compound may be included in an amount of 9 to 20 wt% with respect to the total of (A) to (D).
3. According to 1 or 2, the total of (C) the aliphatic-aromatic copolyester-based compound and (D) the modified polyolefin-based compound may be included in an amount of 55 to 80 wt% with respect to the total of (A) to (D).
4. According to any one of 1 to 3, the aliphatic-aromatic copolyester-based compound and the modified polyolefin-based compound may be included in a weight ratio of 5:1 to 15:1 in a mixture.
5. According to any one of 1 to 4, (A), (B), (C), and (D) may be included in amounts of 7 to 30 wt%, 20 to 35 wt%, 35 to 70 wt%, and 1 to 10 wt%, respectively, with respect to the total of (A) to (D).
6. According to any one of 1 to 5, the polyolefin-based compound may include one or more selected from the group consisting of very-low-density polyethylene, low-density polyethylene, linear low-density polyethylene, medium-density polyethylene, high-density polyethylene, and a combination thereof.
7. According to any one of 1 to 6, the polyolefin-based compound may have a melt index (MI) of 0.1 to 50 g/10 min measured at 190 °C and a 2.16 kg load in accordance with ASTM D1238, a density of 0.900 g/cm³ to 0.930 g/cm³ measured in accordance with ASTM D1505, and a weight-average molecular weight of 50,000 to 1,000,000 g/mol.
8. According to any one of 1 to 7, the biodegradable resin may include one or more selected from the group consisting of thermoplastic starch, poly(lactic acid), polycaprolactone, poly(butylene succinate), poly(glycolic acid), polyhydroxyalkanoate, cellulose, chitin, and a mixture thereof.
9. According to 8, the thermoplastic starch may have an average particle diameter (D50) of 100 to 600 nm.
10. According to any one of 1 to 9, the thermoplastic starch may further include a plasticizer.
11. According to any one of 1 to 10, the aliphatic-aromatic copolyester-based compound may include one or more selected from the group consisting of poly(butylene adipate/terephthalate) and poly(butylene succinate/terephthalate).
12. According to any one of 1 to 11, the modified polyolefin-based compound may include one or more selected from the group consisting of maleic anhydride-grafted polyethylene and maleic anhydride-grafted polypropylene.
13. According to any one of 1 to 12, the total of (A) to (D) included in the biodegradable resin composition may be 95 wt% or more.
14. According to any one of 1 to 13, the biodegradable resin composition may have a biodegradability of 60% or more relative to the biodegradability of cellulose based on 45 days, as measured in accordance with ISO 14855-1.
15. According to another embodiment, a biodegradable resin molded article is manufactured by molding the above-described biodegradable resin composition.
16. According to 15, the biodegradable resin molded article may have a drop impact strength of 190 to 1000 g measured in accordance with ASTM D1790.

According to still another embodiment, a method of manufacturing a biodegradable resin molded article, which includes the steps of: (1) mixing (A) a polyolefin-based compound, (B) a biodegradable resin, (C) an aliphatic-aromatic copolyester-based compound, and (D) a modified polyolefin-based compound so that (A) the polyolefin-based compound is included in an amount of 7 to 30 wt% with respect to a total of (A) to (D), and a total of (C) the aliphatic-aromatic copolyester-based compound and (D) the modified polyolefin-based compound is included in an amount of 45 to 80 wt% with respect to the total of (A) to (D), and performing melt blending to obtain a biodegradable resin composition; and (2) molding the biodegradable resin composition, is provided.

According to an embodiment, a biodegradable resin composition and a biodegradable resin molded article, which provide excellent biodegradability despite including a non-degradable polyolefin-based compound and exhibit significantly improved drop impact strength, are provided.

According to another embodiment, a biodegradable resin composition and a biodegradable resin molded article, which exhibit excellent mechanical properties, are provided.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

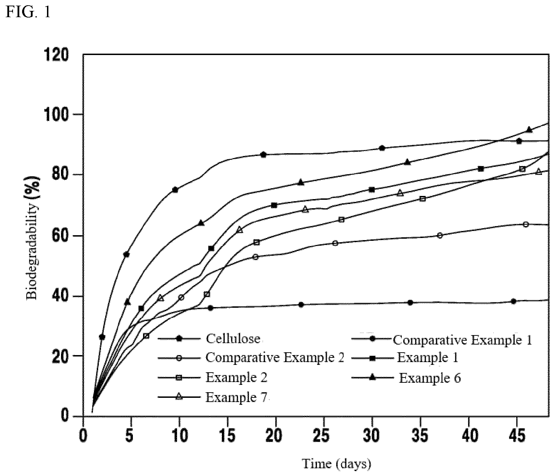

FIG. 1 shows a result of evaluating biodegradability of examples, comparative examples, and a reference example. In FIG. 1, the X-axis represents the number of biodegradability evaluation days (units: days), and the Y-axis represents biodegradability (units: %).

### DETAILED DESCRIPTION OF EXEMPLARY EMBODIMENTS

Hereinafter, the present invention will be described in further detail. However, the present invention may be embodied in many different forms and is not limited to the embodiments set forth herein.

In this specification, a certain part "including" a certain element signifies that the certain part may further include another element instead of excluding the other element unless particularly indicated otherwise.

In this specification, a singular expression is interpreted as a meaning including the singular or plural interpreted in the context unless otherwise specified.

In this specification, in describing the numerical range, "X to Y" means X or more and Y or less (X ≤ and ≤ Y).

In this specification, "biodegradable" means that a material is readily decomposed into water and carbon dioxide and/or methane by microorganisms such as bacteria, algae, and fungi. Therefore, a biodegradable resin composition may mean that the physical destruction of a molded article manufactured therefrom and the reduction in molecular weight due to breakage of the main chain of a polymer which is a constituent component occur.

According to an embodiment, a biodegradable resin composition and a biodegradable resin molded article, which provide excellent biodegradability despite including a non-degradable polyolefin-based compound, are provided. In addition, a biodegradable resin composition and a biodegradable resin molded article, which exhibit significantly improved drop impact strength, are provided. Additionally, a biodegradable resin composition and a biodegradable resin molded article, which exhibit excellent mechanical properties, are provided.

### Biodegradable resin composition

According to an embodiment, a biodegradable resin composition includes (A) a polyolefin-based compound, (B) a biodegradable resin, (C) an aliphatic-aromatic copolyester-based compound, and (D) a modified polyolefin-based compound, wherein (A) the polyolefin-based compound is included in an amount of 7 to 30 wt% with respect to a total of (A) to (D), and a total of (C) the aliphatic-aromatic copolyester-based compound and (D) the modified polyolefin-based compound is included in an amount of 45 to 80 wt% with respect to the total of (A) to (D).

### (A) Polyolefin-based compound

The polyolefin-based compound may be widely used due to having a low cost and excellent processability. However, since the polyolefin-based compound is substantially non-degradable by inherently having no biodegradability, it is recognized as a major cause of environmental pollution.

Here, "inherently having no biodegradability" may mean that a material (e.g., a polyolefin-based compound alone) not including an additive for imparting biodegradability is not significantly decomposed (biologically decomposed) into carbon dioxide and/or methane under various treatment conditions such as sunlight, sea, or landfill within a limited period of time (e.g. 1, 2, 3, 4, or 5 years).

When the polyolefin-based compound is mixed with components to be described below, the biodegradability of a composition including the polyolefin-based compound can be improved.

According to an embodiment, the polyolefin-based compound may be a homopolymer formed by polymerization of an olefin-based monomer alone or a copolymer formed by copolymerization of an olefin-based monomer and an olefin-based comonomer or a polar comonomer.

According to an embodiment, the olefin-based monomer may be any one of ethylene, propylene, 1-butene, 1-pentene, 4-methyl-1-pentene, 1-hexene, 1-heptene, 1-octene, 1-decene, 1-undecene, 1-dodecene, 1-tetradecene, and 1-hexadecene, but the present invention is not limited thereto. The comonomer and/or the polar comonomer may be vinyl acetate and/or the like, but the present invention is not limited thereto.

According to an embodiment, the polyolefin-based compound may include polyethylene, a polyethylene-based copolymer, polypropylene, a polypropylene-based copolymer, or a mixture thereof.

Preferably, the polyolefin-based compound may be polyethylene. Polyethylene may facilitate the implementation of all the above-described effects of the present invention.

Specifically, polyethylene may include one or more selected from the group consisting of very-low-density polyethylene (VLDPE), low-density polyethylene (LDPE), linear low-density polyethylene (LLDPE), medium-density polyethylene (MDPE), high-density polyethylene (HDPE), and a combination thereof.

More preferably, the polyolefin-based compound may be low-density polyethylene, linear low-density polyethylene, or a mixture thereof. When low-density polyethylene, linear low-density polyethylene, or a mixture thereof is used in a composition including components to be described below, a biodegradable resin composition whose tensile strength, tear strength, elongation rate, or drop impact strength is excellent can be easily prepared.

According to an embodiment, the polyolefin-based compound may have a melt index (MI) of 0.1 to 50 g/10 min measured at 190 °C and a 2.16 kg load in accordance with ASTM D1238 and a density of 0.900 g/cm³ to 0.930 g/cm³ measured in accordance with ASTM D1505. The polyolefin-based compound may have a weight-average molecular weight of 50,000 to 1,000,000 g/mol, and preferably, 50,000 to 300,000 g/mol. When the polyolefin-based compound satisfies the melt index (MI), density, and weight-average molecular weight ranges, a biodegradable resin composition whose tensile strength, tear strength, elongation rate, or drop impact strength is excellent can be easily prepared. The "weight-average molecular weight" may be measured as a conversion value with respect to polystyrene as measured by gel permeation chromatography. This is a method already known to those skilled in the art.

The polyolefin-based compound is included in an amount of 7 to 30 wt% with respect to the total of (A) to (D).

When the content of the polyolefin-based compound with respect to the total of (A) to (D) is less than 7 wt%, it may be impossible to manufacture and process a film from the composition, and since the finally manufactured film or molded article has a very low drop impact strength, the use as a molded article may be impossible. When the content of the polyolefin-based compound with respect to the total of (A) to (D) is more than 30 wt%, an effect of improving the drop impact strength of a film or molded article manufactured from the composition may be insignificant, and the biodegradability of the composition may also decrease. For example, the content of the polyolefin-based compound with respect to the total of (A) to (D) may be 7, 8, 9, 10, 11, 12, 13, 14, 15, 16, 17, 18, 19, 20, 21, 22, 23, 24, 25, 26, 27, 28, 29, or 30 wt%.

According to an embodiment, the polyolefin-based compound may be included in an amount of 9 to 20 wt% with respect to the total of (A) to (D). Within the above-described range, as the content of the polyolefin-based compound is increased, drop impact strength is significantly increased, and other properties of a film or molded article can be excellent.

According to an embodiment, the polyolefin-based compound may be included in an amount of 9 to 17 wt% with respect to the total of (A) to (D). Within the above-described range, as the content of the polyolefin-based compound is increased, drop impact strength is significantly increased, and other properties of a film or molded article can be excellent.

According to an embodiment, the polyolefin-based compound may be included in an amount of 9 to 15 wt% with respect to the total of (A) to (D). Within the above-described range, as the content of the polyolefin-based compound is increased, drop impact strength is significantly increased, and other properties of a film or molded article can be excellent.

According to an embodiment, the polyolefin-based compound may be included in an amount of 10 to 15 wt% with respect to the total of (A) to (D). Within the above-described range, as the content of the polyolefin-based compound is increased, drop impact strength is significantly increased, and other properties of a film or molded article can be remarkably excellent.

### (B) Biodegradable resin

The biodegradable resin can improve biodegradability when included in a composition including a non-degradable polyethylene-based compound.

According to an embodiment, the biodegradable resin may include one or more selected from the group consisting of thermoplastic starch (TPS), poly(lactic acid) (PLA), polycaprolactone (PCL), poly(butylene succinate) (PBS), poly(glycolic acid) (PGA), polyhydroxyalkanoate (PHA), cellulose, chitin, and a mixture thereof, but the present invention is not particularly limited thereto.

According to an embodiment, the biodegradable resin may be thermoplastic starch.

Thermoplastic starch may be starch having excellent biodegradability and consisting of two components, amylose and amylopectin. Thermoplastic starch exhibits hydrophilicity by having a hydroxyl group in glucose of amylose and is capable of increasing the biodegradability of the composition by having a hydrogen bond. According to an embodiment, thermoplastic starch is a granular dry powder and may have an average particle diameter (D50) of 100 to 600 nm, and preferably, 500 to 600 nm. When thermoplastic starch is included in the composition within the above-described range, the effects of the present invention can be easily exhibited. The "average particle diameter (D50)" may mean a particle diameter corresponding to 50% in volume percentage in arrangement from the minimum value to the maximum value using a particle size analyzer, and may be measured by a method typically known to those skilled in the art.

Thermoplastic starch may be derived from plants. For example, thermoplastic starch may include at least one selected from the group consisting of rice starch, wheat starch, corn starch, sweet potato starch, potato starch, tapioca starch, cassava starch, and a modified starch thereof, but the present invention is not particularly limited thereto. Here, the modified starch may refer to physically or chemically treated α-starch, acid-treated starch, oxidized starch, amphoteric starch, ester-modified starch, ether-modified starch, or the like.

Polylactic acid, polycaprolactone, poly(butylene succinate), and polyglycolic acid may correspond to aliphatic polyester-based compounds. They may be highly biodegradable by microorganisms and provide biocompatibility and the like. Particularly, polyglycolic acid is widely used especially for medical purposes due to having excellent mechanical properties such as high strength and high heat resistance.

Polyhydroxyalkanoate corresponds to polyester and may exhibit excellent biodegradability and excellent degradability under all conditions such as aerobic, anaerobic, and composting conditions. Particularly, polyhydroxybutyrate (PHB), which is a type of polyhydroxyalkanoate, is a homopolymer in which D-3-hydroxybutyric acid is linearly connected. It is an energy storage synthesized in cells by a variety of bacteria and may provide biological functions like starch or glycogen.

Cellulose and chitin are types of natural polymers and may be used as environmentally friendly materials due to having excellent biodegradability, easy availability, and no toxicity.

The biodegradable resin may consist of only the above-described thermoplastic starch, polylactic acid, polycaprolactone, poly(butylene succinate), polyglycolic acid, polyhydroxyalkanoate, cellulose, chitin, or a mixture thereof, but the biodegradable resin may further include a plasticizer.

According to an embodiment, thermoplastic starch may further include a plasticizer. When thermoplastic starch includes a plasticizer, the plasticizer can reduce the crystallinity of the starch itself by controlling the binding force between polymer chains, and improve compatibility with a different type of resins. Also, the plasticizer can address the carbonization phenomenon of starch, which may occur in extrusion processing, and allow the effect to be exhibited even when the thermoplastic starch has a small particle diameter relative to the initial particle diameter.

The plasticizer is not particularly limited as long as it is able to plasticize starch. For example, the plasticizer may include glycerin, polyethylene glycol, sorbitol, polyhydric alcohols, organic compounds having no hydroxyl group and capable of forming a hydrogen bond, sugar alcohol anhydrides, animal proteins, plant proteins, aliphatic acids, phthalate esters, dimethyl and diethyl succinate and ester related thereto, glycerol triacetate, glycerol monoacetate, glycerol diacetate, glycerol monopropionate, glycerol dipropionate, glycerol tripropionate, glycerol butanoate, glycerol stearate, esters of lactic acid, esters of citric acid, esters of adipic acid, esters of stearic acid, esters of oleic acid, esters of other aliphatic or aromatic acids, or a combination thereof. Preferably, the plasticizer may be glycerin.

According to an embodiment, the plasticizer may be included in an amount of 10 to 40 wt%, for example, 20 to 40 wt%, in the biodegradable resin, for example, thermoplastic starch. Within the above-described range, the effect resulting from addition of the plasticizer can be obtained, and the effect resulting from addition of the biodegradable resin cannot be hindered.

According to an embodiment, the biodegradable resin may be included in an amount of 20 to 35 wt% with respect to the total of (A) to (D). Within the above-described range, the composition can provide excellent biodegradability. Also, the composition can easily exhibit excellent tensile strength, tear strength, elongation rate, and/or drop impact strength. For example, the biodegradable resin may be included in an amount of 20, 21, 22, 23, 24, 25, 26, 27, 28, 29, 30, 31, 32, 33, 34, or 35 wt% with respect to the total of (A) to (D). Preferably, the biodegradable resin may be included in an amount of 20 to 32 wt%, 20 to 30 wt%, 23 to 30 wt%, or 23 to 28 wt% with respect to the total of (A) to (D).

### (C) Aliphatic-aromatic copolyester-based compound and (D) modified polyolefin-based compound

According to an embodiment, the composition includes a mixture of an aliphatic-aromatic copolyester-based compound and a modified polyolefin-based compound. The mixture is used as a compatibilizer in the composition, and when the above-described polyolefin-based compound is included in an amount of 7 to 30 wt%, the mixture can allow the drop impact strength of a sample or molded article formed of the composition to be significantly improved. The present invention may be characterized in that, as a mixture of an aliphatic-aromatic copolyester-based compound and a modified polyolefin-based compound is used as a compatibilizer among several compatibilizers and the mixture is included in an amount of 45 to 80 wt% in the composition and the polyolefin-based compound is included in an amount of 7 to 30 wt%, biodegradability is provided, and drop impact strength is significantly improved.

The mixture is included in an amount of 45 to 80 wt% with respect to the total of (A) to (D). When the mixture is included in an amount of less than 45 wt% with respect to the total of (A) to (D), a compatibility improvement effect resulting from addition of the mixture may be insignificant, and biodegradability may also be poor. When the mixture is included in an amount of more than 80 wt% with respect to the total of (A) to (D), a compatibility improvement effect may be insignificant relative to an increase in the mixture content, and drop impact strength may also be insignificantly improved. For example, the mixture may be included in an amount of 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80 wt% with respect to the total of (A) to (D).

According to an embodiment, the mixture may be included in an amount of 55 to 80 wt% with respect to the total of (A) to (D). Within the above-described range, the above-described effects of the present invention can be easily improved, and a molded article can be easily manufactured.

According to an embodiment, the mixture may be included in an amount of 55 to 70 wt% with respect to the total of (A) to (D). Within the above-described range, the above-described effects of the present invention can be easily improved, and a molded article can be easily manufactured.

According to an embodiment, the mixture may be included in an amount of 60 to 70 wt% with respect to the total of (A) to (D). Within the above-described range, the above-described effects of the present invention can be easily improved, and a molded article can be easily manufactured.

According to an embodiment, the aliphatic-aromatic copolyester-based compound and the modified polyolefin-based compound may be included in a weight ratio of 5:1 to 15:1, for example, 7:1 to 15:1 or 8:1 to 15:1 in the mixture. Within the above-described range, an effect of improving drop impact strength, compatibility, and biodegradability can be excellent. For example, the weight ratio may be 5:1, 5.5:1, 6:1, 6.5:1, 7:1, 7.5:1, 8:1, 8.5:1, 9:1, 9.5:1, 10:1, 10.5:1, 11:1, 11.5:1, 12:1, 12.5:1, 13:1, 13.5:1, 14:1, 14.5:1, or 15:1. Preferably, the aliphatic-aromatic copolyester-based compound and the modified polyolefin-based compound may be included in a weight ratio of 10:1 to 15:1. Within the above-described range, an effect of improving drop impact strength, compatibility, and biodegradability can be remarkably excellent.

### (C) Aliphatic-aromatic copolyester-based compound

The aliphatic-aromatic copolyester-based compound may be a component for imparting biodegradability and also act as a compatibilizer.

The polyolefin-based compound, which is chemically non-polar, may have poor compatibility with a polar biodegradable resin, especially, thermoplastic starch. Therefore, as the aliphatic-aromatic copolyester-based compound is additionally introduced, compatibility among components in the composition can be improved, and biodegradability can be imparted to the polyolefin-based compound.

According to an embodiment, the aliphatic-aromatic copolyester-based compound may include one or more selected from the group consisting of poly(butylene adipate/terephthalate) (PBAT) and poly(butylene succinate/terephthalate) (PBST), but the present invention is not particularly limited thereto.

According to an embodiment, the aliphatic-aromatic copolyester-based compound may be poly(butylene adipate/terephthalate).

According to an embodiment, the aliphatic-aromatic copolyester-based compound may have a weight-average molecular weight of 10,000 to 100,000 g/mol, and preferably, 20,000 to 50,000 g/mol as measured by gel permeation chromatography. Within the above-described range, a biodegradable resin composition, which allows a sample and molded article (such as a film) formed of the composition to have excellent tensile strength, tear strength, elongation rate, or drop impact strength, can be easily provided.

According to an embodiment, the aliphatic-aromatic copolyester-based compound may be included in an amount of 35 to 70 wt% with respect to the total of (A) to (D). Within the above-described range, the biodegradable resin composition can easily provide not only excellent biodegradability but also excellent tensile strength, tear strength, elongation rate, or drop impact strength. For example, the aliphatic-aromatic copolyester-based compound may be included in an amount of 35, 36, 37, 38, 39, 40, 41, 42, 43, 44, 45, 46, 47, 48, 49, 50, 51, 552, 53, 54, 55, 56, 57, 58, 59, 60, 61, 62, 63, 64, 65, 66, 67, 68, 69, or 70 wt%. Preferably, the aliphatic-aromatic copolyester-based compound may be included in an amount of 40 to 70 wt%, 45 to 70 wt%, 50 to 70 wt%, 55 to 70 wt%, or 55 to 65 wt% with respect to the total of (A) to (D).

### (D) Modified polyolefin-based compound

The modified polyolefin-based compound may act as a compatibilizer in the biodegradable resin composition.

According to an embodiment, the modified polyolefin-based compound may be a maleic anhydride-grafted polyolefin-based compound. **In** this case, the polyolefin in the modified polyolefin-based compound may be a compound whose type is the same as or different from the above-described polyolefin-based compound. Preferably, the modified polyolefin-based compound may include one or more selected from the group consisting of maleic anhydride-grafted polyethylene (A-g-PE) and maleic anhydride-grafted polypropylene (A-g-PP). More preferably, the modified polyolefin-based compound may be maleic anhydride-grafted polyethylene.

The maleic anhydride-grafted polyolefin can not only improve compatibility between the chemically non-polar polyolefin-based compound and the polar biodegradable resin but also improve interfacial adhesion between the polyolefin-based compound and the biodegradable resin. When interfacial adhesion between different types of resins is excellent, the biodegradable resin is decomposed under composting conditions to induce oxidation of the polyolefin-based compound in contact therewith, and thus degradability can be imparted to the non-degradable polyolefin-based compound.

According to an embodiment, the content of maleic anhydride in the maleic anhydride-grafted polyolefin may be 1.0 to 2.5 wt%. When the amount of grafted maleic anhydride is 1.0 to 2.5 wt%, an effect of improving adhesion to a polar substrate can be exhibited

According to an embodiment, the modified polyolefin-based compound may be included in an amount of 1 to 10 wt% with respect to the total of (A) to (D). Within the above-described range, the biodegradable resin composition can easily provide not only excellent biodegradability but also excellent tensile strength, tear strength, elongation rate, or drop impact strength. For example, the modified polyolefin-based compound may be included in an amount of 1, 2, 3, 4, 5, 6, 7, 8, 9, or 10 wt% with respect to the total of (A) to (D). Preferably, the modified polyolefin-based compound may be included in an amount of 3 to 8 wt%, 3 to 7 wt%, 4 to 7 wt%, or 4 to 6 wt% with respect to the total of (A) to (D).

The total of (A) to (D) included in the biodegradable resin composition may be 95 wt% or more, for example, 95 to 100 wt%, 95 wt%, 96 wt%, 97 wt%, 98 wt%, 99 wt%, or 100 wt%.

The biodegradable resin composition may further include an additive typically known to those skilled in the art in addition to (A) to (D).

According to an embodiment, the biodegradable resin composition may have a melting temperature of 100 to 130 °C as measured by differential scanning calorimetry (DSC) or dynamic mechanical analysis (DMA).

According to an embodiment, the biodegradable resin composition may have a melt index of 0.01 to 10 g/10 min as measured at 190 °C and a 2.16 kg load in accordance with ASTM D1238. In an embodiment of the present invention, the biodegradable resin composition may have a melt index of 0.1 to 8 g/10 min, 0.1 to 5 g/10 min, 0.1 to 3 g/10 min, 0.1 to 2 g/10 min, or 0.1 to 1.5 g/10 min.

According to an embodiment, the biodegradable resin composition may have a biodegradability of 60% or more relative to the biodegradability of cellulose based on 45 days, as measured in accordance with ISO 14855-1. In an exemplary embodiment of the present invention, the biodegradable resin composition may have a biodegradability of 65% or more, 70% or more, 72% or more, 75% or more, 77% or more, 80% or more, 85% or more, or 90% or more relative to the biodegradability of cellulose based on 45 days, as measured in accordance with ISO 14855-1.

In measurement of the biodegradability of a resin composition according to an embodiment of the present invention in accordance with ISO 14855-1, as the resin composition has a biodegradability of 60% or more relative to the biodegradability of cellulose based on 45 days as a short-term measurement for determining whether or not it is a biodegradable resin and exhibits a tendency in which biodegradability continuously increases, it can be expected that a biodegradability of 90% or more based on 180 days, which is a requirement for the biodegradable resin, is satisfied.

According to an embodiment, the biodegradable resin composition may be prepared by a method of preparing a biodegradable resin composition, which includes: mixing (A) a polyolefin-based compound, (B) a biodegradable resin, (C) an aliphatic-aromatic copolyester-based compound, and (D) a modified polyolefin-based compound so that (A) the polyolefin-based compound is included in an amount of 7 to 30 wt% with respect to a total of (A) to (D), and a total of (C) the aliphatic-aromatic copolyester-based compound and (D) the modified polyolefin-based compound is included in an amount of 45 to 80 wt% with respect to the total of (A) to (D); and performing melt blending.

In this case, since descriptions of (A) the polyolefin-based compound, (B) the biodegradable resin, (C) the aliphatic-aromatic copolyester-based compound, and (D) the modified polyolefin-based compound are substantially the same as those in the above-described biodegradable resin composition, a detail description thereof is omitted.

In addition, when (A) the polyolefin-based compound, (B) the biodegradable resin, (C) the aliphatic-aromatic copolyester-based compound, and (D) the modified polyolefin-based compound satisfy respective content ranges, a biodegradable resin composition having not only excellent biodegradability but also excellent tensile strength, tear strength, elongation rate, or drop impact strength can be prepared.

In an exemplary embodiment, polyethylene, thermoplastic starch, poly(butylene adipate/terephthalate), and maleic anhydride-grafted polyethylene may be subjected to melt blending.

The melt blending may be performed using at least one selected from a single-screw extruder, a twin-screw extruder, a kneader, a Brabender Plasti-Corder, a mixing roll, and a mixer, but the present invention is not particularly limited thereto. In an exemplary embodiment, the melt blending may be performed using a twin-screw extruder.

According to an embodiment, the melt blending may be performed at 100 to 300 °C. In an exemplary embodiment of the present invention, the melt blending may be performed at 160 to 210 °C.

In the case of melt blending using a twin-screw extruder, a rotational speed of the screw may be 40 to 700 rpm, and preferably, 100 to 200 rpm.

According to an embodiment, a biodegradable resin composition prepared by melt blending of the above components may be in the form of a pellet, but the present invention is not particularly limited thereto.

According to an embodiment, a method of imparting biodegradability to a polyolefin-based compound includes the steps of: (1) providing a polyolefin-based compound inherently having no biodegradability; (2) providing a biodegradable resin, an aliphatic-aromatic copolyester-based compound, and a modified polyolefin-based compound; and (3) subjecting the polyolefin-based compound, the biodegradable resin, the aliphatic-aromatic copolyester-based compound, and the modified polyolefin-based compound to melt blending to obtain a resin composition, and as determined by measuring the biodegradabilities of the resin composition obtained in step (3) and cellulose in accordance with ISO 14855-1, the resin composition may have a biodegradability of 60% or more relative to the biodegradability of cellulose based on 45 days.

According to an embodiment, the biodegradable resin composition may have a biodegradability of 65% or more, 70% or more, 72% or more, 75% or more, 77% or more, 80% or more, 85% or more, or 90% or more relative to the biodegradability of cellulose based on 45 days, as measured in accordance with ISO 14855-1.

In this case, descriptions of the polyolefin-based compound, the biodegradable resin, the aliphatic-aromatic copolyester-based compound, and the modified polyolefin-based compound are the same as those in the above-described biodegradable resin composition, and the melt blending method thereof is the same as that in the above-described method of preparing a biodegradable resin composition.

### Biodegradable resin molded article

According to an embodiment, a biodegradable resin molded article may be manufactured by molding the above-described biodegradable resin composition according to an embodiment.

A method of molding the biodegradable resin composition is not particularly limited, and a molding method known in the art to which the present invention belongs may be used. For example, a biodegradable resin molded article may be manufactured by molding the biodegradable resin composition by a typical method such as blown film molding, extrusion molding, injection molding, casting molding, or the like.

In an embodiment of the present invention, the biodegradable resin molded article may include any one of a film, a sheet, a bag, a bottle, a cap, a lid, a box, a plate, and a cup, but the present invention is not particularly limited thereto. In an exemplary embodiment of the present invention, the biodegradable resin molded article may be a film, a sheet, or a bag.

In an embodiment of the present invention, the biodegradable resin molded article may have a biodegradability of 60% or more relative to the biodegradability of cellulose based on 45 days, as measured in accordance with ISO 14855-1. In an exemplary embodiment of the present invention, the biodegradable resin molded article may have a biodegradability of 65% or more, 70% or more, 72% or more, 75% or more, 77% or more, 80% or more, 85% or more, or 90% or more relative to the biodegradability of cellulose based on 45 days, as measured in accordance with ISO 14855-1.

In measurement of the biodegradability of a resin molded article according to an embodiment of the present invention in accordance with ISO 14855-1, as the resin molded article has a biodegradability of 60% or more relative to the biodegradability of cellulose based on 45 days as a short-term measurement for determining whether or not it is a biodegradable resin, it can be expected that a biodegradability of 90% or more is satisfied.

According to an embodiment, the biodegradable resin molded article may have a melt index of 0.01 to 10 g/10 min as measured at 190 °C and a 2.16 kg load in accordance with ASTM D1238. In an embodiment of the present invention, the biodegradable resin molded article may have a melt index of 0.1 to 8 g/10 min, 0.1 to 5 g/10 min, 0.1 to 3 g/10 min, 0.1 to 2 g/10 min, or 0.1 to 1.5 g/10 min.

According to an embodiment, the biodegradable resin molded article may have a melt flow ratio (MFR) of a melt index measured at 190 °C and a 21.6 kg load in accordance with ASTM D1238 and a melt index measured at 190 °C and a 2.16 kg load of 20 to 100. In an embodiment of the present invention, the biodegradable resin molded article may have an MFR of 20 to 80, 20 to 70, 30 to 100, 30 to 80, or 30 to 70.

According to an embodiment, the biodegradable resin molded article may be a film having a thickness of 20 to 50 µm, and preferably, about 30 µm, and the film may have a machine direction (MD) tensile strength of 100 to 300 kgf/cm² and a transverse direction (TD) tensile strength of 100 to 450 kgf/cm². According to an embodiment, the film may have a MD tensile strength of 100 to 250 kgf/cm² and a TD tensile strength of 100 to 350 kgf/cm².

According to an embodiment, the biodegradable resin molded article may be a film having a thickness of 20 to 50 µm, and preferably, about 30 µm, and the film may have a MD Elmendorf tear strength of 200 to 600 g and a TD Elmendorf tear strength of 200 to 1,000 g. In an exemplary embodiment of the present invention, the film may have a MD Elmendorf tear strength of 200 to 500 g and a TD Elmendorf tear strength of 200 to 800 g.

According to an embodiment, the biodegradable resin molded article may be a film having a thickness of 20 to 50 µm, and preferably, about 30 µm, and the film may have a MD elongation rate of 200 to 600% and a TD elongation rate of 200 to 800%. In an exemplary embodiment of the present invention, the film may have a MD elongation rate of 200 to 500% and a TD elongation rate of 300 to 700%.

According to an embodiment, the biodegradable resin molded article may be a film having a thickness of 20 to 50 µm, and preferably, about 30 µm, and the film may have a drop impact strength of 190 to 1,000 g. In an exemplary embodiment of the present invention, the film may have a drop impact strength of 300 to 800 g or 600 to 800 g.

According to an embodiment, the biodegradable resin molded article may be a film having a thickness of 20 to 50 µm, and preferably, about 30 µm, and the film may have a MD tensile strength of 100 to 300 kgf/cm² and a TD tensile strength of 100 to 450 kgf/cm²; a MD Elmendorf tear strength of 200 to 600 g and a TD Elmendorf tear strength of 200 to 1,000 g; a MD elongation rate of 200 to 600% and a TD elongation rate of 200 to 800%; and a drop impact strength of 190 to 1,000 g.

According to an embodiment, a method of manufacturing a biodegradable resin molded article, which includes obtaining a biodegradable resin composition and molding the biodegradable resin composition, is provided.

According to an embodiment, a method of manufacturing a biodegradable resin molded article, which includes the steps of: (1) mixing (A) a polyolefin-based compound, (B) a biodegradable resin, (C) an aliphatic-aromatic copolyester-based compound, and (D) a modified polyolefin-based compound so that (A) the polyolefin-based compound is included in an amount of 7 to 30 wt% with respect to a total of (A) to (D), and a total of (C) the aliphatic-aromatic copolyester-based compound and (D) the modified polyolefin-based compound is included in an amount of 45 to 80 wt% with respect to the total of (A) to (D), and performing melt blending to obtain a biodegradable resin composition; and (2) molding the biodegradable resin composition, is provided.

In step (1), descriptions of the polyolefin-based compound, the biodegradable resin, the aliphatic-aromatic copolyester-based compound, and the modified polyolefin-based compound are the same as those in the above-described method of preparing a biodegradable resin composition, and the melt blending method thereof is the same as that in the above-described method of preparing a biodegradable resin composition.

In step (2), a method of molding the biodegradable resin composition is the same as that in the above-described biodegradable resin molded article.

According to an embodiment, provided is a method of imparting biodegradability to a polyolefin molded article inherently having no biodegradability, which includes steps of: (1) providing a polyolefin-based compound inherently having no biodegradability; (2) providing a biodegradable resin, an aliphatic-aromatic copolyester-based compound, and a modified polyolefin-based compound; (3) subjecting the polyolefin-based compound, the biodegradable resin, the aliphatic-aromatic copolyester-based compound, and the modified polyolefin-based compound to melt blending to obtain a resin composition; and (4) molding the resin composition to obtain a resin molded article, and as determined by measuring the biodegradabilities of the resin molded article obtained in step (4) and cellulose in accordance with ISO 14855-1, the resin molded article may have a biodegradability of 60% or more relative to the biodegradability of cellulose based on 45 days.

In an embodiment of the present invention, the biodegradable resin molded article may have a biodegradability of 65% or more, 70% or more, 72% or more, 75% or more, 77% or more, 80% or more, 85% or more, or 90% or more relative to the biodegradability of cellulose based on 45 days, as measured in accordance with ISO 14855-1.

In this case, descriptions of the polyolefin-based compound, the biodegradable resin, the aliphatic-aromatic copolyester-based compound, and the modified polyolefin-based compound are the same as those in the above-described biodegradable resin composition, the melt blending method thereof is the same as that in the above-described method of preparing a biodegradable resin composition, and the method of molding the resin composition is the same as that in the above-described biodegradable resin molded article.

Hereinafter, the present invention will be described in further detail by way of examples and comparative examples. However, the following examples are provided for illustrative purposes and are not intended to limit the scope of the present invention.

Components used in examples and comparative examples are as follows.
A1: Linear low-density polyethylene (LLDPE, MI: 20 g/10 min, density: 0.924 g/cm³, weight-average molecular weight: 61000 g/mol)
A2: Low-density polyethylene (LDPE, MI: 0.8 g/10 min, density: 0.923 g/cm³)
B1: Thermoplastic starch (TPS, TPS commercially available from Hanwha Chemical, containing 25 wt% of a plasticizer, average particle diameter (D50) of thermoplastic starch: 500 to 600 nm)
C1: PBAT (SOLPOL-1000N commercially available from GIO SOLTEC, weight-average molecular weight: 21,000 g/mol)
D1: Maleic anhydride-grafted polyethylene (MA-g-PE, Fusabond^{®} E588 commercially available from DuPont)

### Preparation Example

Components were mixed in amounts (units: parts by weight) shown in Table 1 below to prepare a biodegradable resin composition, and the prepared composition was subjected to melt blending in a twin-screw extruder at 160 to 210 °C to obtain a pellet. The obtained pellet was fed into an extruder, heated at a mixing zone temperature of 190 °C, and extruded to perform blown film processing.

The blown film processing was performed under conditions including a 40 mmϕ screw, a 75 mmϕ die, a die gap of 2 mm, and a screw rotational speed of 180 rpm. The finally manufactured film had a thickness of about 30 µm.

### Test Example

The resin composition obtained in each of the examples and comparative examples and the film sample obtained by molding the resin composition were tested as follows. Results thereof are shown in Table 1 and FIG. 1 below.

### (1) Melt index (MI, units: g/10 min) and melt flow ratio (MFR)

The melt index of the manufactured film was measured at 190 °C and a 2.16 kg load in accordance with ASTM D1238.

The melt indices of the manufactured film were measured at 190 °C and a 2.16 kg load and at 190 °C and a 21.6 kg load in accordance with ASTM D1238, and a ratio (MI_{21.6}/MI_{2.16}) thereof was obtained.

### (2) Absolute biodegradability (units: %) and relative biodegradability (units: %)

In order to confirm the biodegradability of the resin composition based on 45 days and the tendency thereafter, biodegradability was measured for 48 days in accordance with ISO 14855-1. The biodegradability of the resin composition was measured after the manufactured pellet was pulverized so that an average particle diameter (D50) was about 250 µm. The biodegradability of the molded article was measured after the manufactured film was pulverized so that an average particle diameter (D50) was about 250 µm. As Reference Example 1, the biodegradability of cellulose was measured by the same method. The measured biodegradability is shown as absolute biodegradability in Table 1, and the absolute biodegradability in Table 1 refers to the biodegradability of the resin composition. A percentage of the biodegradability of the resin composition relative to the biodegradability of cellulose was calculated as relative biodegradability.

### (3) Tensile strength (units: kgf/cm²) and elongation rate (units: %)

The tensile strength and elongation rate of the manufactured film were measured in both directions (i.e., a machine direction (MD) and a transverse direction (TD)) in accordance with ASTM D882.

### (4) Elmendorf tear strength (units: g)

The Elmendorf tear strength of the manufactured film was measured in both directions (i.e., a MD and a TD) in accordance with ASTM D1004.

### (5) Drop impact strength (units: g)

The drop impact strength of the manufactured film was measured in accordance with ASTM D1709.

**[Table 1]**

| | | Examples | | | | | | | Comparative Examples | | | | Reference Example |
|---|---|---|---|---|---|---|---|---|---|---|---|---|---|
| | | 1 | 2 | 3 | 4 | 5 | 6 | 7 | 1 | 2 | 3 | 4 | 1 |
| A1 | | 10 | 15 | 20 | 25 | 30 | 0 | 0 | 40 | 0 | 0 | 5 | - |
| A2 | | 0 | 0 | 0 | 0 | 0 | 10 | 15 | 0 | 0 | 0 | 0 | - |
| B1 | | 25 | 25 | 25 | 25 | 25 | 25 | 25 | 30 | 25 | 25 | 25 | - |
| C1 | | 60 | 55 | 50 | 45 | 40 | 60 | 55 | 25 | 75 | 70 | 65 | - |
| D1 | | 5 | 5 | 5 | 5 | 5 | 5 | 5 | 5 | 0 | 5 | 5 | - |
| Total | | 100 | 100 | 100 | 100 | 100 | 100 | 100 | 100 | 100 | 100 | 100 | - |
| Melt index (MI) | | 1.28 | 0.4 | - | - | - | 0.53 | 0.6 | 0.3 | 3.6 | - | - | - |
| Melt flow ratio (MFR) | | 34 | 62 | - | - | - | 56 | 54 | 80 | 140 | - | - | - |
| Absolute biodegradability | | 87.8 | 87.9 | - | - | - | 97.5 | 81.6 | 38.5 | 63.5 | - | - | 91.4 |
| Relative biodegradability | | 96.1 | 96.2 | - | - | - | 106.7 | 89.3 | 42.1 | 69.5 | - | - | 100 |
| Tensile strength | MD | 168 | 179 | - | - | - | 150 | 101 | 374 | 480 | - | - | - |
| | TD | 198 | 167 | - | - | - | 150 | 116 | 191 | 209 | - | - | - |
| Elongation rate | MD | 454 | 446 | - | - | - | 346 | 225 | 450 | 149 | - | - | - |
| | TD | 679 | 646 | - | - | - | 580 | 557 | 522 | 28 | - | - | - |
| Elmendorf tear | MD | 427 | 256 | - | - | - | 265 | 233 | 359 | 68 | - | - | - |
| | TD | 722 | 541 | - | - | - | 564 | 470 | 985 | 100 | - | - | - |
| strength | | | | | | | | | | | | | |
| Drop impact strength | | 660 | 640 | 440 | 410 | 380 | 273 | 190 | 86 | 100 | - | 154 | - |

| | | | | | | | | | | | | | |
|---|---|---|---|---|---|---|---|---|---|---|---|---|---|
| * In Table 1, film processing of Comparative Example 3 was not possible. * In Table 1, "-" indicates that the corresponding property was not evaluated. | | | | | | | | | | | | | |

As shown in Table 1, it can be confirmed that Examples 1 to 7, which are specific examples of an embodiment of the present invention, provide excellent biodegradability despite including a non-degradable polyolefin-based compound and exhibit significantly improved drop impact strength and improved mechanical properties such as tensile strength, an elongation rate, Elmendorf tear strength, and the like.

On the other hand, Comparative Examples, which do not satisfy the configuration of an embodiment of the present invention, do not achieve all of the above-described effects of the present invention. Particularly, Comparative Examples 1 and 4, in which the content of the polyolefin-based compound is out of the range of the present invention despite including the aliphatic-aromatic copolyester-based compound and modified polyolefin-based compound of the present invention, exhibit significantly decreased drop impact strength, and thus the use thereof may be difficult in manufacture of a molded article.

As shown in FIG. 1, it can be seen that Examples 1, 2, 6, and 7, which are specific examples of an embodiment of the present invention, exhibit significantly higher biodegradability than that of cellulose (Reference Example 1).

It should be understood that simple modifications or changes of the present invention can be easily carried out by those skilled in the art and that all such modifications or changes are encompassed in the scope of the present invention.

## Claims

1. A biodegradable resin composition comprising:
(A) a polyolefin-based compound;
(B) a biodegradable resin;
(C) an aliphatic-aromatic copolyester-based compound; and
(D) a modified polyolefin-based compound,
wherein (A) the polyolefin-based compound is included in an amount of 7 to 30 wt% with respect to a total of (A) to (D), and
a total of (C) the aliphatic-aromatic copolyester-based compound and (D) the modified polyolefin-based compound is included in an amount of 45 to 80 wt% with respect to the total of (A) to (D).

2. The biodegradable resin composition of claim 1, wherein (A) the polyolefin-based compound is included in an amount of 9 to 20 wt% with respect to the total of (A) to (D).

3. The biodegradable resin composition of claim 1, wherein the total of (C) the aliphatic-aromatic copolyester-based compound and (D) the modified polyolefin-based compound is included in an amount of 55 to 80 wt% with respect to the total of (A) to (D).

4. The biodegradable resin composition of claim 1, wherein the aliphatic-aromatic copolyester-based compound and the modified polyolefin-based compound are included in a weight ratio of 5:1 to 15:1 in a mixture.

5. The biodegradable resin composition of claim 1, wherein (A), (B), (C), and (D) are included in amounts of 7 to 30 wt%, 20 to 35 wt%, 35 to 70 wt%, and 1 to 10 wt%, respectively, with respect to the total of (A) to (D).

6. The biodegradable resin composition of claim 1, wherein the polyolefin-based compound includes one or more selected from the group consisting of very-low-density polyethylene, low-density polyethylene, linear low-density polyethylene, medium-density polyethylene, high-density polyethylene, and a combination thereof.

7. The biodegradable resin composition of claim 1, wherein the polyolefin-based compound has a melt index (MI) of 0.1 to 50 g/10 min measured at 190 °C and a 2.16 kg load in accordance with ASTM D1238, a density of 0.900 g/cm³ to 0.930 g/cm³ measured in accordance with ASTM D1505, and a weight-average molecular weight of 50,000 to 1,000,000 g/mol.

8. The biodegradable resin composition of claim 1, wherein the biodegradable resin includes one or more selected from the group consisting of thermoplastic starch, poly(lactic acid), polycaprolactone, poly(butylene succinate), poly(glycolic acid), polyhydroxyalkanoate, cellulose, chitin, and a mixture thereof.

9. The biodegradable resin composition of claim 8, wherein the thermoplastic starch has an average particle diameter (D50) of 100 to 600 nm.

10. The biodegradable resin composition of claim 8, wherein the thermoplastic starch further includes a plasticizer.

11. The biodegradable resin composition of claim 1, wherein the aliphatic-aromatic copolyester-based compound includes one or more selected from the group consisting of poly(butylene adipate/terephthalate) and poly(butylene succinate/terephthalate).

12. The biodegradable resin composition of claim 1, wherein the modified polyolefin-based compound includes one or more selected from the group consisting of maleic anhydride-grafted polyethylene and maleic anhydride-grafted polypropylene.

13. The biodegradable resin composition of claim 1, wherein the total of (A) to (D) included in the biodegradable resin composition is 95 wt% or more.

14. The biodegradable resin composition of claim 1, wherein the biodegradable resin composition has a biodegradability of 60% or more relative to the biodegradability of cellulose based on 45 days, as measured in accordance with ISO 14855-1.

15. A biodegradable resin molded article manufactured by molding the biodegradable resin composition according to any one of claim 1 to claim 14.

16. The biodegradable resin molded article of claim 15, wherein the biodegradable resin molded article has a drop impact strength of 190 to 1000 g measured in accordance with ASTM D1790.

17. A method of manufacturing a biodegradable resin molded article, comprising the steps of:
(1) mixing (A) a polyolefin-based compound, (B) a biodegradable resin, (C) an aliphatic-aromatic copolyester-based compound, and (D) a modified polyolefin-based compound so that (A) the polyolefin-based compound is included in an amount of 7 to 30 wt% with respect to a total of (A) to (D), and a total of (C) the aliphatic-aromatic copolyester-based compound and (D) the modified polyolefin-based compound is included in an amount of 45 to 80 wt% with respect to the total of (A) to (D), and performing melt blending to obtain a biodegradable resin composition; and
(2) molding the biodegradable resin composition.
